# EUROPEAN PATENT APPLICATION

(11) **EP 1 925 424 A1**
(43) Date of publication of application: **28.05.2008**
(21) Application number: 07119327.0
(22) Date of filing: 25.10.2007
(51) Int. Cl.: B29C 49/06, B29C 49/48

(54) **Method and Apparatus for Blow Molding in an Injection Molding Machine**

(30) Priority: 21.11.2006 US 562328
(71) Applicant: Risdon International, Inc., Watertown, CT 06795-0100 (US)
(72) Inventor: Thomas, John, New York, NY 10992 (US)
(74) Representative: Parry, Christopher Stephen

(57) **Abstract**

A molding apparatus (100) and method for creating a molded object that incorporate a mold (250,350) with a mold cavity (500), a mold core (420) disposed within the mold cavity, and a reciprocating sleeve (630) insertable between the mold core and the mold cavity. The apparatus and method include injecting molten plastic between the core and the sleeve forming a preform object (101), then retracting the sleeve and expanding the preform object by blow molding, using pressurized fluid provided through jets in the mold core, until the object expands to fill the mold cavity. The apparatus and method further include thermal conditioning of the sleeve when it is retracted to create a temperature profile in the sleeve that is then applied to the preform object, thereby providing finer control of the temperature profile of the preform object before the final blow molding step.

## Description

### FIELD OF THE INVENTION

This invention relates to a blow molding apparatus and method for creating molded objects, more particularly to an injection and blow molding apparatus and method that allows use of a conventonal injection molding machine to produce blow molded objects.

### BACKGROUND OF THE INVENTION

Plastic bottles are typically characterized as having a wide hollow body and a narrow neck. To form such plastic bottles it is typical to use a blow molding process.

An injection blow molding machine typically has three stations with a central turret that transfers the material which is being processed from one station to another. At the first station, molten plastic is injected into a heated preform mold around a core rod to form a preform object. The preform mold separates and the turret transfers the core rod and preform object to a second station. The second station is the blow mold station. The blow mold has a cavity with a neck diameter and a body diameter. The body diameter is usually greater than the neck diameter. With the core rod disposed in the blow mold, compressed air or other gas is injected through the core causing the preform object to expand to the diameter of the mold. The diameter of the object in the neck area remains relatively unchanged. The blow mold then is opened and the core is transferred to a third station where the blow molded bottle is stripped from the core. In the typical machine, a plurality of such bottles are made simultaneously, such that there are a plurality of cores and mold cavities used in the process.

One benefit of the above process is that the molds can be designed to incorporate different temperature zones. The molds typically incorporate a heating element that keeps the temperature of the body region of the molds elevated. They also may incorporate a cooling element that keeps the temperature of the neck region low. Keeping the temperature of the body region of the preform object warm helps facilitate the expansion of this region in the blow mold. Keeping the temperature of the neck region of the preform object cool helps control the neck molding it to a precise size.

Temperature control is also an important feature for bottles used in certain industries. For instance, in the cosmetics industry it is important for sample bottles to have a particular finish. Precise control of temperature in different temperature regions allows control of the finish of the molded bottles.

The deficiency of the typical injection blow molding machine is that a very long set-up time is required, limiting production and increasing costs. The three stations and two molds that must interact with an independent rotating turret, so significant time is required in set-up of a production run to assure that these different components are properly aligned before production can begin.

In contrast to injection blow molding, a standard injection molding apparatus has a mold is closed about a core or series of cores, and molten plastic is injected into the spacing between the cores and the mold. The mold separates and the molded object is stripped from the core. A standard injection molding machine has one station and is relatively fast to set up for molding operations. The deficiency in conventional injection molding is that there is a limitation on the shape of hollow articles such as bottles molded in an injection molding machine. Essentially, injection molding of bottles is limited to cylindrical bottle of constant diameter. This is because in order for a bottle to be removed from the cores after molding, for the core diameter at the body section cannot be larger than the diameter of the bottle neck. Furthermore, if a mold shape is made with a larger diameter area for the body and a smaller diameter area for the neck, the extruded plastic injected into the mold will fill the space resulting molded product with extremely thick walls. Thus the bottle shapes that can be formed using injection molding are very limited.

What is needed is an apparatus that can combine the set-up simplicity of a standard injection molding machine with the versatility y of an injection blow molding machine. It would be beneficial if such an apparatus could limit the number of mold parts necessary to form a bottle with cavities of different diameters. It would also be beneficial if such an apparatus could form these bottles at a single station.

### SUMMARY OF THE INVENTION

These and other objects are achieved by providing an injection molding apparatus that incorporates a mold with a mold cavity, a core disposed within the mold cavity, and a reciprocating sleeve insertable between the core and the mold.

Another aspect of the molding apparatus is to dispose the sleeve within an expanded region of the mold cavity, inject extruded plastic between the sleeve and the core to form a preform object, then to retract the sleeve and expand the object by blow molding within the expanded region to form a blow molded object.

It is a further aspect for the sleeve to be temperature controlled to condition the injected molten plastic. The temperature conditioning can be obtained by temperature controlled temperature conditioner which comprises heated or cooled fluid filled channels or electric heating located adjacent to the sleeve in a retracted position.

Other objects of the invention and its particular features and advantages will become more apparent from consideration of the following drawings and accompanying description.

### BRIEF DESCRIPTION OF THE DRAWINGS

FIG. 1 is a top plan schematic view of an injection molding apparatus in accordance with one embodiment of the invention.

FIG. 2 is a detailed top view in cross-section of the molding apparatus of FIG. 1, showing mold elements brought together to form a mold cavity around a core and a sleeve inserted into a mold cavity.

FIG. 3 is a detailed top view in cross-section of the molding apparatus of FIG. 1 showing the sleeve retracted from the mold cavity and a temperature conditioner disposed about an outer surface of the sleeve.

FIG. 4 is detailed top view in cross-section of the molding apparatus of FIG. 1 with the sleeve retracted from the mold cavity and a temperature conditioner disposed about an inner surface of the sleeve.

FIG. 5 is a schematic top view of the molding apparatus of FIG. 1 with the mold elements separated and the core retracted.

FIG. 6 is a detailed side view in cross-section through a right component with a plurality of mold cavities.

### DETAILED DESCRIPTION OF THE INVENTION

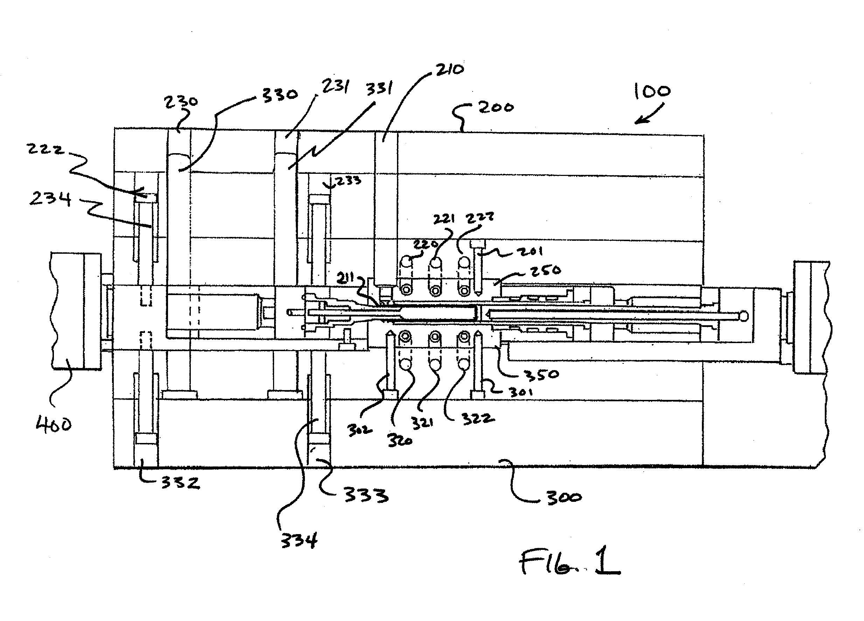

Fig. 1 depicts a top down cross-sectional view of injection molding apparatus 100 in a closed state. Injection molding apparatus 100 comprises a left component 200, a right component 300, a left mold element 250, a right mold element 350, an arm 400 and a base component 600.

Extending into the proximal end of apparatus 100 is arm 400. Arm 400 is disposed in the region where the left 200 and right 300 components are brought together. The left 200 and right 300 components comprise regions that receive arm 400, such that when the components are brought together, a portion of the arm 400 is in flush contact with the components 200, 300. Arm 400 comprises a retaining component 410, a sliding element 411 and a mold core 420. Arm 400 and retaining component 410 are coupled to each other by pin 401. Core 420 comprises a cylindrical receiving element 430 and a cylindrical actuating element 440. Cylindrical receiving element 430 is coupled to sliding element 411 at the proximal end of core 420. Sliding element 411 enables core 420 to move in the proximal and distal directions within arm 400. Moving sliding element 411 in the distal direction inserts actuating element 440 and receiving element 430 through opening 412 of retaining component 410. As a result, receiving element 430 is partially disposed within retaining component 410 and sliding element 411. Moving sliding element 411 in the proximal direction retreats receiving element 430 and actuating element 440 through opening 412. Preferably, mold core 420 is coated with a release coating such as PTFE.

Receiving element 430 is characterized by a proximal portion 435 with a diameter that is greater than a distal portion 436 and corresponds to the diameter of the inner chamber formed by sliding element 411 and retaining component 410. When sliding element 411 is moved in a distal direction, distal portion 436 extends through opening 412 and has a diameter that corresponds to the inner diameter of opening 412.

Receiving element 430 is also characterized by a series of cylindrical inner chambers 431-433 that are formed within the proximal portion 435 and the distal portion 436. The proximal portion 435 forms proximal chamber 431 and middle chamber 432. The distal portion 436 forms distal chamber 433. The proximal chamber 431 has a diameter that is greater that the middle chamber 432, which is greater than the diameter of the distal chamber 433. These chambers 431-433 are used as fluid channels through which pressurized fluid, such as air, will flow.

The actuating element 440 is a male component, a portion of which is disposed within the receiving element 430. Actuating element 440 is characterized by a series of regions 441-443 that extend from the proximal end to the distal end of element 440 and a stop 444 that is coupled to the proximal region 441. The proximal region 441 has a diameter that is less than the diameter of the middle region 442, which is less than the diameter of the distal region 443. The outer diameter of distal region 443 corresponds to the outer diameter of distal portion 436 of receiving element 430. The outer diameter of middle region 442 is less than the diameter of the distal chamber 433 so that a small separation exists between middle region 442 and distal portion 436 of receiving element 430. As a result, the actuating element 443 comprises a distal transition region 445 between distal region 443 and middle region 442 that abuts a distal face 434 of receiving element 430. It should be noted that transition region 445 and face 434 are sloped surfaces relative to the surface of distal region 443 and come into flush contact with each other. Actuating element 440 also comprises a proximal transition region 446 between proximal region 441 and middle region 422. Proximal transition region 446 comprises a sloped surface similar to distal transition region 445. Stop 444 is coupled to proximal region 441 and is disposed within proximal chamber 431. Stop 444 has a diameter that corresponds to the diameter of proximal chamber 431 and is greater than middle chamber 432. As a result, the movement of actuating element 443 in the proximal or distal direction is limited by distal transition region 445 and stop 444. Motion in the distal direction is limited by stop 444 engaging proximal portion 435 forming middle chamber 432. Motion in the proximal direction is limited by distal transition region 445 coming into contact with distal face 434.

Through the combination of these elements, pressurized fluid, such as air, can be used to act upon a preform object 101 formed about core 420. Pressurized fluid is introduced to chambers 431-433 through arm 400. The pressurized fluid engages proximal transition region 446 and induces the actuating element 440 to move in a distal direction. The movement of actuating element 440 causes a channel to open up between middle region 442, distal transition region 445 and distal portion 436. This permits the pressurized fluid to flow through the channel and act upon a preform object 101 formed about core 420. The formation of a preform object about core 420 will be discussed in more detail below.

Left 250 and right 350 mold elements are coupled to left 200 and right 300 components via pins 201, 301, 302. Each mold element 250, 350 forms half of a cavity 500 used to form a preform object. Each mold element 250, 350 comprises a core region 251, 351, a neck region 252, 352, an expanded region 253, 353, and a bubbler region 254, 354. When the mold elements 250, 350 are brought together they form a complete mold with a core cavity 510, a neck cavity 520, an expanded cavity 530, and a base cavity 540. Further, when the mold elements 250, 350 are brought together and core 420 is extending through opening 412 in a distal direction, the core regions 251, 351, neck regions 252, 352, and expanded regions 253, 353 encompass the distal portion 436 of receiving element 430 and the distal region 443 of actuating element 440.

Core cavity 510 has a diameter that corresponds to the outer diameter of distal portion 436. When the mold elements 250, 350 are brought together, core regions 251, 351 come into flush contact with core distal portion 436. This prevents any plastic materials injected into cavities 520 and 530 from flowing about the distal portion 436 disposed within regions 251, 351.

Distally spaced from core regions 251, 351 are neck regions 252, 352. Each neck region 252, 352 has a threaded profile that enables the neck of a preform object 103 to be threaded. Neck cavity 520 has a diameter that is greater than core cavity 510 but less than expanded cavity 530. Further, this diameter is greater than the outer diameter of distal portion 436. As a result, a space is formed between the neck regions 252, 352 and distal portion 436.

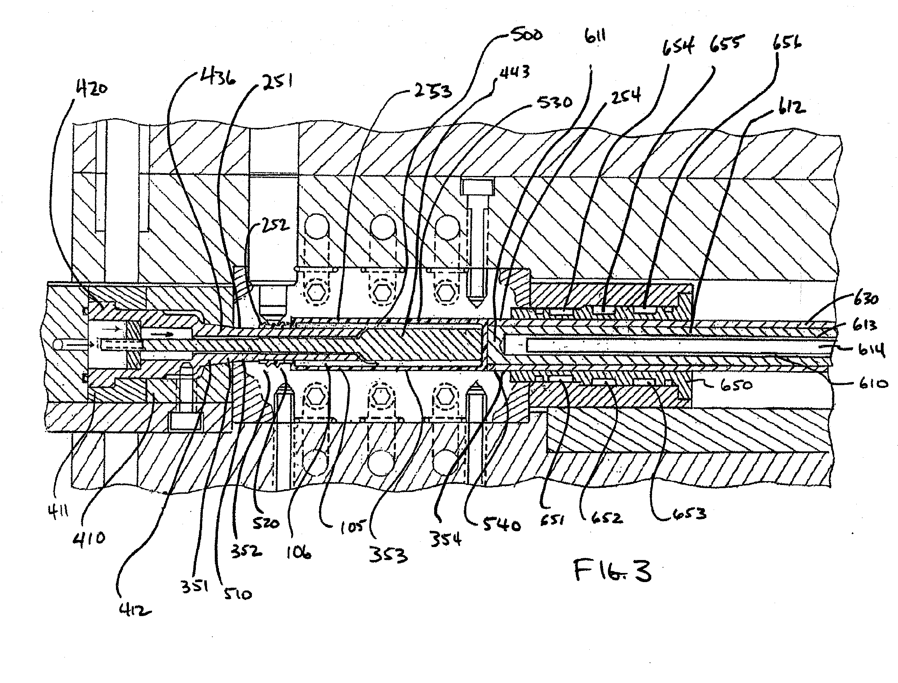

Distally spaced from neck regions 252, 352 are expanded regions 253, 353. Expanded cavity 530 has a diameter that is greater than neck cavity 520. The space formed between expanded regions 252, 352, distal portion 436, and distal region 443 is greater than the space formed between neck regions 252, 352 and distal portion 436. As shown in Fig. 3 and discussed in more detail below, the processing of a preform object 101 will enable an expanded object 105 to be formed. This processing also forms a space between the expanded object 105, the distal portion 436, and the distal region 443.

Distally spaced from each expanded region 253, 353 is a base region 254, 354 that is used to form a base cavity 540. The diameter of the base cavity 540 corresponds to the outer diameter of sleeve 630. When mold elements 250, 350 are brought together, the base regions 254, 354 come into contact with sleeve 630 and inhibit the ability of extruded plastic to flow within these regions 254, 354.

Left component 200 further comprises extruded molten plastic injector 210. Injector 210 extends through left component 200 and left mold element 250. Injector 210 comprises spout 211 that has an opening in neck region 252. Injector 210 utilizes pressure to enable extruded plastic to be introduced into the space that separates core 420 from distal portion 436 and flow the extruded around the portion of core 420 disposed within the neck cavity 520 and expanded cavity 530. This forms a preform object 101 with a cavity 102 and a neck 103 with a neck cavity 104. The diameter of cavity 102 and neck cavity 104 will correspond to the outer diameter of distal portion 436 and distal region 443.

Mold elements 250, 350 further comprise heating elements 223-225 and 323-325 that are disposed within the bodies of mold elements 250, 350. Heating elements 223-225 are spaced between injector 210 and pin 201 from the proximal end to the distal end of expanded region 253. Likewise, heating elements 323-325 are spaced between pins 302 and 301 from the proximal end to the distal end of expanded region 353. These heating elements 223-225 and 323-325 are coupled to corresponding heating elements 220-222 and 320-322 contained within left 200 and right 300 components. Heating elements 223-225 and 323-325 are utilized to temperature condition the injected extruded molten plastic to facilitate the processing of a preform object. Depending on the processing needs these elements 223-225 and 323-325 can be used to form temperature profiles from the proximal to the distal ends of expanded regions 253, 353.

Coupled to right component 300 is base component 600. Base component 600 provides a surface against which the base of a preform object is formed. Base component 600 comprises a bubbler tube 610, sleeve 630, and sleeve conditioner 650. Bubbler tube 610 comprises a base wall 611 at the proximal end of bubbler tube 610. When the left 250 and right 350 mold elements are brought together, base wall 611 is disposed within bubbler cavity 540 and immediately adjacent to expanded cavity 530. Base wall 611 is also disposed opposite to and spaced from the distal region 443 of actuating element 440. The space between base wall 611 and actuating element 440 is used to partially form the base of a preform object 101.

Extending from base wall 611 in the distal direction is inner conditioning wall 612. Disposed within bubbler tube 610 is bubbler cooling element 614. Bubbler cooling element 614 has a diameter less than the inner diameter of inner conditioning wall 612 forming bubbler channel 613. Through Base component 600 a cooling fluid is injected into and flows about channel 613. The cooling fluid cools base wall 611 and inner conditioning wall 612. In turn, this heat is removed from sleeve 630 and the preform object that is molded in the space between distal region 443 and base wall 611.

Disposed about inner conditioning wall 612 is sleeve 630. The inner diameter of sleeve 630 corresponds to the outer diameter of inner conditioning wall 612. The inner diameter of sleeve 630 also corresponds to the diameter of neck cavity 520. The distal end of sleeve 630 is coupled to sliding element 632. Sliding element 632 enables sleeve 630 to be inserted into expanded cavity 530 or retracted from expanded cavity 530 during the formation of a preform object. Sleeve 630 is inserted into expanded cavity 530 before extruded molten plastic is injected into neck cavity 520 and expanded cavity 530 and is disposed over the entire length of the expanded cavity 530. This creates a sleeve cavity 530 with a diameter that corresponds to the diameter of neck cavity 520 and is a subset of expanded cavity 530. When extruded molten plastic is injected into cavities 520, 530 by injector 210, it flows into the space that separates core distal portion 436 from the neck regions 252, 352 and sleeve 630. The extruded molten plastic also flows into the space that separates core distal region 443 from sleeve 630 and base wall 611. This forms a preform object 101 with a cavity 102 and a neck 103 with a neck cavity 104. The diameter of cavity 102 and neck cavity 104 will correspond to the outer diameter of distal portion 436 and distal region 443. When the sleeve 630 is retracted, the proximal face 631 of sleeve 630 becomes coplanar with the proximal face of base wall 611. The sleeve proximal face 631 in combination with the proximal face of base wall 611 comprise the surfaces against which the base of an expanded object 105 is formed.

Disposed about sleeve 630 is sleeve conditioner 650. The inner diameter of sleeve conditioner 650 corresponds to the outer diameter of sleeve 630. Sleeve 630 slides between bubbler 610 and sleeve conditioner 650. Sleeve conditioner 650 comprises temperature channels 651-656 that are spaced from the proximal end to the distal end of conditioner 650 about sleeve 630. Each channel 651-656 provides a temperature zone that is used to temperature condition sleeve 630 when it is in a retracted state. Such temperature conditioning can be accomplished by flowing a thermally conductive fluid through channels 651-656. Fluids that are either relatively hot or cool can flow through channels 651-656. When a fluid with an elevated temperature is used, the heat is transferred through the thermally conductive material forming conditioner 650 and into sleeve 630. This elevates the temperature of sleeve 630 in the localized region of each channel 651-656. When a fluid with a lowered temperature is used, these channels 651-656 draw heat from sleeve 630 across the material forming conditioner 650 and into the fluid. This reduces the temperature of sleeve 630 in the localized region of each channel 651-656. Depending on the processing needs for the preform object, it is possible for channel 651 to communicate with channel 654, channel 652 to communicate with channel 655, and channel 653 to communicate with channel 656. During processing it is also possible for different areas of sleeve 630 to have different thermal characteristics from the proximal end to the distal end. Channels 651, 654 may have a thermally conductive fluid that provides a first temperature and channels 653, 656 may have a thermally conductive fluid that provides a second temperature that is elevated relative to the first temperature. As a result, the area of sleeve 630 disposed within the region of channels 651, 654 would be thermally conditioned to a temperature that corresponds to the first temperature and the area of sleeve 630 disposed within the region of channels 653, 656 would thermally conditioned to a temperature that corresponds to the second temperature. When the temperature conditioned sleeve 630 is inserted into expanded cavity 530, the sleeve 630 transfers its temperature profile to the injected parison. The area of sleeve 630 associated with the first temperature may remove heat from the injected plastic in that localized area, while the area of sleeve 630 associated with the second temperature may transfer heat to the injected plastic in that localized area. The formation of a preform object with localized thermal characteristics assists in the formation of a preform object during subsequent processing.

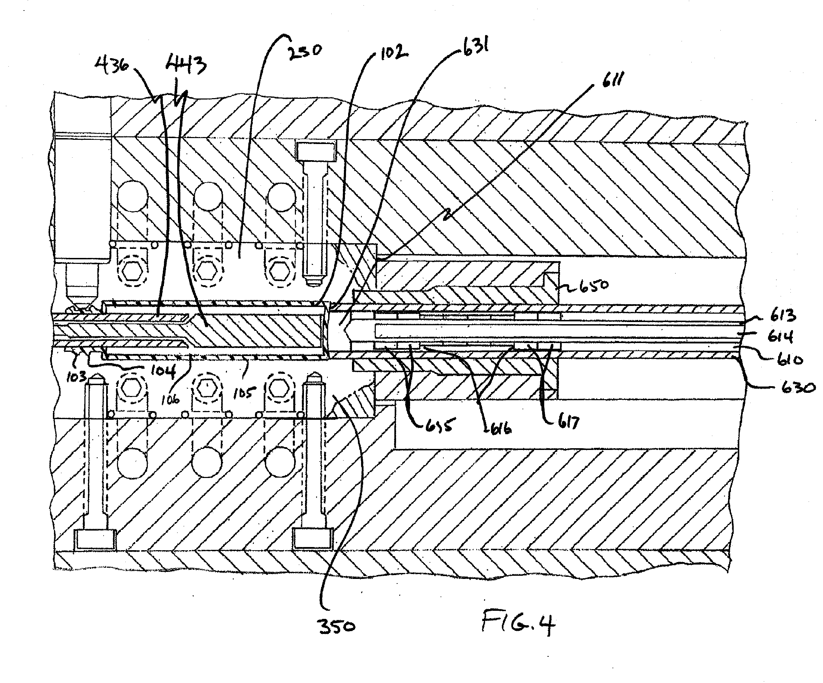

Fig. 4 shows another feature in which temperature conditioning of sleeve 630 is achieved utilizing inner conditioning wall 612. This feature can be used in addition or alternative to channels 651-656. Fig. 4 shows inner wall 612 with fore elements 615 of a first thickness, mid elements 616 of a second thickness, and aft elements 617 of a third thickness. The thickness of mid elements 616 is less than the thickness of the fore 615 and aft 617 elements. With this feature it is possible for the outer diameter of all or a portion of elements 615-617 to be less than the inner diameter of sleeve 630. This forms a space between sleeve 630 and elements 615-617. Such a space affects the transfer of heat from bubbler 610 to sleeve 630 in the localized region of each element 615-617. The greater the space between an element and a sleeve reduces the transfer heat from bubbler 610 to the sleeve 630 in the localized region of the element. As a result, the sleeve 630 is given a temperature profile that corresponds to the profile of elements 615-617. Instead of or in addition to utilizing elements 615-617 with smaller diameters, it is also possible to substitute materials of different thermal conductivity properties. Elements 615 and 617 could comprise a first material, such as an alloy, with a high degree of thermal conductivity. Elements 616 could comprise a second material, such as a ceramic, with a lesser degree of thermal conductivity. This way the transfer of heat from bubbler 610 to sleeve 630 will depend on the thermal properties of the different elements.

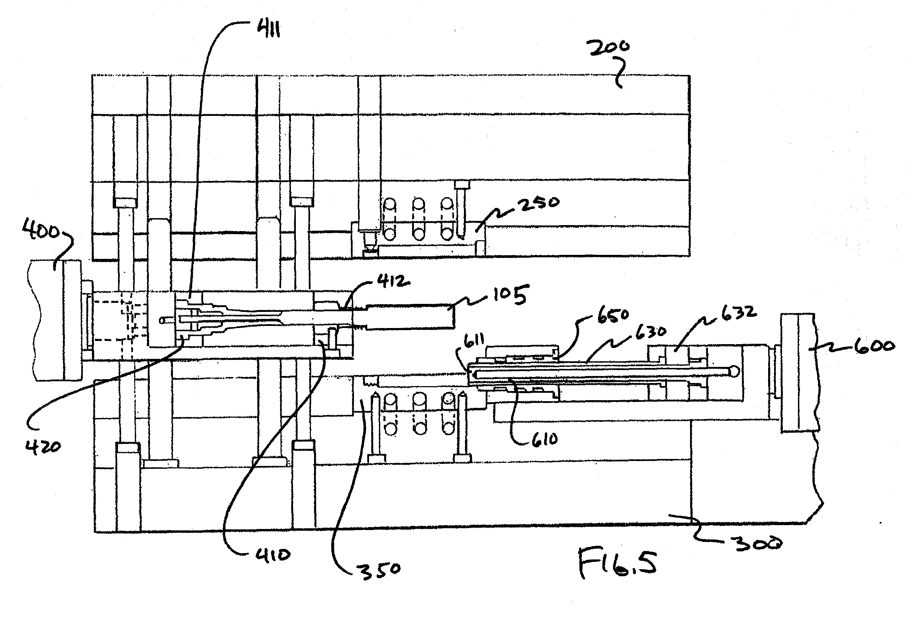

Figs. 1 and 5 illustrate that the left 200 and right 300 components open and close using hydraulic pressure. Left component 200 comprises piston cavities 230, 231 that receive piston rods 330, 331, which are coupled to right component 300. When apparatus 100 is in a state as illustrated in Fig. 1, the left 200 and right 300 components are closed. Hydraulic pressure introduced into piston cavities 230, 235 acts upon the piston rods 330, 335 causing the left 200 and right 300 component to separate, as illustrated in Fig. 5. Left 200 and right 300 components also contain left 232, 233 and right 332, 333 separation channels respectively. Each separation channel has a large diameter cavity and a small diameter cavity. Spanning from each left separation channel to a respective right separation channel are separation rods 234, 334. The ends of each separation rod 234, 334 contain a knob, the diameter of which is greater than the diameter of the associated separation rod and small diameter cavity. Upon separation of the left and right components, the knobs of each separation rod 234, 334, limit the degree of separation of the components by engaging the associated small diameter cavity.

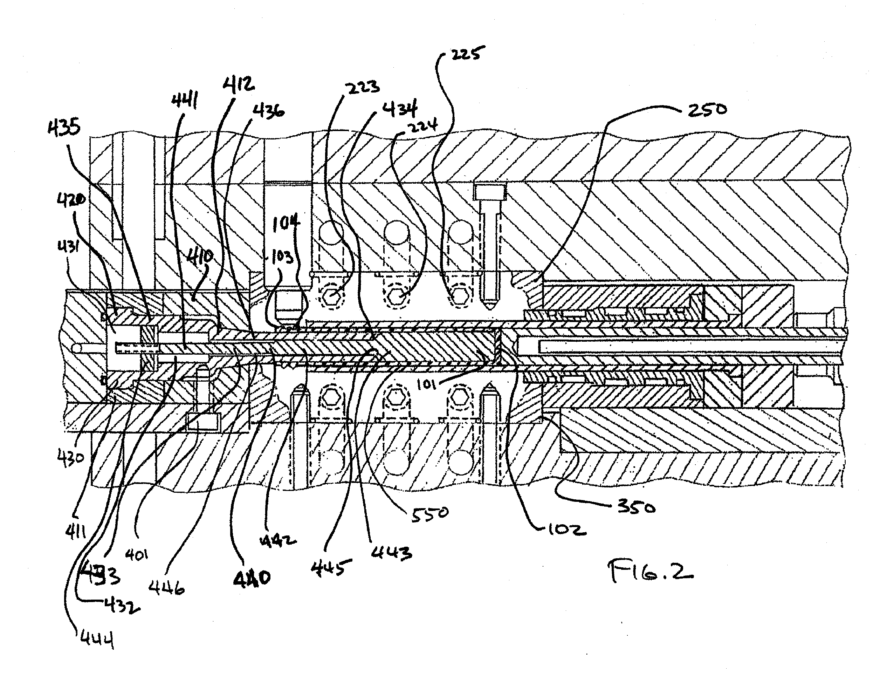

Figs. 1-5 illustrate the manner in which injection molding apparatus 100 operates. The left 200 and right 300 components are separated. The arm 400 is disposed in between components 200, 300. The left 250 and right 350 mold elements are brought together by way of piston rods 330, 331 and piston cavities 230, 231 acting upon the left 200 and right 300 components. The left 200 and right 300 elements components close about arm 400. The left 250 and right 350 mold elements are brought into flush contact with each other. At the same time, the bubbler regions 254, 354 come into flush contact with the outer surface of sleeve 630. Sliding element 411 extends core 420 through opening 412. Distal portion 436 and distal region 443 are now disposed within core cavity 510, neck cavity 520 and expanded cavity 530. Prior to sleeve 630 being inserted into expanded cavity 530, channels 651-656 and/or elements 615-617 condition sleeve 630 with a temperature profile that corresponds to these channels and/or elements 615-617. Subsequently, sleeve 630 is inserted into expanded cavity 530. As a result, a space is formed between the neck regions 252, 352, the sleeve 630, the base wall 611, the end portion 436 and end region 443. Injector 210 injects plastic into this space through neck region 252 such that it flows end portion 436 and end region 443. This forms preform object 101 with cavity 102 and a neck 103 with a neck cavity 104. The cavity 102 and neck cavity 104 have a first inner diameter that corresponds to the outer diameter of distal portion 436 and distal region 443. During this period, the temperature profile of sleeve 630 is transferred to the preform object to assist in subsequent processing. After an appropriate period of time, sleeve 630 is retracted from expanded cavity 530. Pressurized fluid, such as air, is then introduced into chambers 431-433 causing actuating element 440 to move in a distal direction forming a channel. The fluid that flows through this channel then acts upon preform object 101 formed about core 420 in expanded cavity 530. The pressurized fluid forces the preform object 101 to expand in diameter such that the preform object expands to the expanded regions 253, 353 and the proximal face 631. This forms expanded object 105 with expanded cavity 106. The pressurized fluid does not act upon the plastic disposed in the neck cavity 520 and the plastic disposed between base wall 611 and the distal region 443 of core 420. As a result, a blow molded object is formed, which has a threaded neck 103 with a neck cavity 104 that corresponds to the first diameter and an expanded cavity 106 that corresponds to a second diameter that is greater than the first diameter. With the plastic material expanded to expanded regions 253, 353, heating elements 223-225 and 323-325 are able to further condition the expanded object 105 in these regions. After a period of time, the left 250 and right 350 mold elements are separated. Sliding element 411 moves core 420 in a distal direction and through opening 412. This permits the expanded object 105 with neck 103 to be removed from about core 420 and collected for finishing.

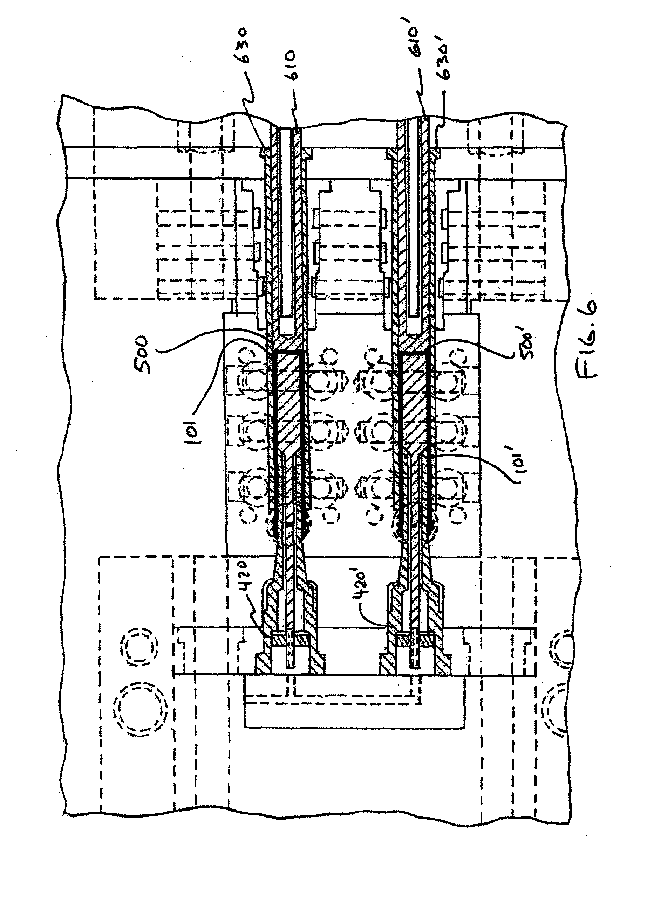

Fig. 6 depicts an alternative view of molding apparatus 100. This view is a cross-sectional horizontal view through the right component 300. Fig. 6 shows that mold elements 250, 350 form a plurality of mold cavities 500, 500'. Mold cavity 500 is disposed above mold cavity 500'. These mold cavities 500, 500' are to form preform objects 100, 100' and expanded objects, not shown, in the same manner discussed above.

One benefit of the above apparatus is that it simplifies the manner in which a bottle with an expanded cavity is formed. This apparatus eliminates the need for a rotating turret, three stations and the alignment of these elements. Overall, this apparatus simplifies the setup process. This apparatus also makes it possible to process molds having a large number of cavities, in the range of 16-24 cavities per mold, increasing the production rate relative to a turret type blow molding machine. Furthermore, the present invention does not have the horizontal or vertical stacking limitations associated with blow molding apparatuses. Finally, this apparatus provides simple motions improving the process time.

Although the invention has been described with reference to a particular arrangement of parts, features, and materials these are not intended to exhaust all possible arrangements, features and materials, and indeed many modifications and variations will be ascertainable to those of skill in the art.

## Claims

1. A molding apparatus, comprising:
a mold having a mold cavity, said mold cavity having a neck portion and an expanded portion, said expanded portion having an inner wall cross-sectional measurement which is greater than an inner wall cross-sectional measurement of said neck portion;
a mold core extending into an end of said mold cavity, said mold core having at least one fluid blow channel extending to one or more blow jets positioned on a portion of said mold core located within said mold cavity;
a reciprocating hollow sleeve movable from a preform position wherein said sleeve is located between said core and said mold cavity defining a preform mold cavity, to a retracted position wherein said sleeve is removed from said mold cavity, said sleeve having an inner wall cross-sectional measurement such that said neck portion of said mold cavity and said preform mold cavity are aligned with and in fluid communication with each other when said sleeve is in the preform position;
means for directing molten plastic to said neck portion of said mold cavity and said preform mold cavity; and
a pressurized fluid source operably connected to said at least one fluid blow channel;

2. The molding apparatus of claim 1 further comprising a temperature conditioner positioned for thermal exchange with said sleeve.

3. The molding apparatus of claim 2 wherein said temperature conditioner is positioned for thermal exchange with said sleeve when said sleeve is in a retracted position.

4. The molding apparatus of claims 2 or 3 wherein said temperature conditioner includes:
a housing sized to be closely fitted inside said sleeve when said sleeve is in a retracted position, said housing containing one or more circulating temperature controlled fluids, said housing being positioned for thermal exchange with said sleeve when said sleeve is in a retracted position; and
a sleeve jacket closely fitting around at least a portion of said sleeve when said sleeve is in a retracted position, said sleeve jacket containing one or more circulating temperature controlled fluids or one or more heating elements.

5. The molding apparatus of claim 4, wherein a first temperature channel in said sleeve jacket thermally conditions a first area of the sleeve to a first temperature and a second temperature channel in said sleeve jacket thermally conditions a second area of the sleeve to a second temperature.

6. The molding apparatus of claims 4 or 5, wherein said housing has a cross-sectional area varying between a larger cross-sectional area where said housing is closely fitted inside to a lesser cross-sectional area to create a spacing between said sleeve and said housing.

7. The molding apparatus of claim 6, wherein said housing thermally conditions an area of the sleeve where said sleeve is closely fitted to said housing to a first temperature, and thermally conditions another area of the sleeve where said spacing is located between said sleeve and said housing to a second temperature.

8. The molding apparatus of claims 1, 2, 3, 4, 5, 6, or 7 wherein said reciprocating sleeve comprises a hollow cylinder.

9. A method for molding an object, in a mold having a mold cavity, said mold cavity having a neck portion and an expanded portion, said expanded portion having an inner wall cross-sectional measurement which is greater than an inner wall cross-sectional measurement of said neck portion, and a mold core extending into an end of said mold cavity, said mold core having at least one fluid blow channel extending to one or more blow jets positioned on a portion of said mold core located within said mold cavity; and a reciprocating hollow cylindrical sleeve movable from a preform position wherein said sleeve is located between said core and said mold cavity defining a preform mold cavity, to a retracted position wherein said sleeve is removed from said mold cavity, said sleeve having an inner wall cross-sectional measurement such that said neck portion of said mold cavity and said preform mold cavity are aligned with and in fluid communication with each other when said sleeve is in the preform position; comprising the steps of:
injecting a molten material into said neck portion of said mold cavity and said preform mold cavity to form a preform object;
retracting the sleeve from the mold cavity; and
directing a pressurized fluid through said at least one fluid blow channel to said one or more blow jets into said preform object to expand the preform object to form an expanded object molded by said expanded portion of said mold.

10. The method of claim 11 further comprising a step of controlling the temperature of the sleeve.

11. The method of claim 10, wherein temperature controlling step occurs by temperature conditioning said sleeve when the sleeve is retracted from said mold cavity.
